# EUROPEAN PATENT SPECIFICATION

(11) **EP 2 163 070 B1**
(45) Date of publication and mention of the grant of the patent: **29.08.2012**
(21) Application number: 08714732.8
(22) Date of filing: 29.02.2008
(51) Int. Cl.: H04L 29/06, H04L 12/66, H04M 11/06, H04Q 3/42, H04Q 3/64

(54) **METHOD AND SYSTEM FOR ENFORCING PROXY USE WITHIN AN ENTERPRISE COMMUNICATIONS SYSTEM**
VERFAHREN UND SYSTEM ZUM DURCHSETZEN DER PROXY-VERWENDUNG IN EINEM UNTERNEHMENSKOMMUNIKATIONSSYSTEM
PROCÉDÉ ET SYSTÈME POUR IMPOSER L'UTILISATION D'UN SERVEUR MANDATAIRE DANS UN SYSTÈME DE COMMUNICATIONS D'ENTREPRISE

(30) Priority: 29.06.2007 US 947076 P
(43) Date of publication of application: 17.03.2010
(73) Proprietor: Research In Motion Limited, Waterloo, ON N2L 3W8 (CA)
(72) Inventor: LEE, Dalsu, Thornhill, Ontario L4J 7Y8 (CA); SHATSKY, Alexander, Waterloo, Ontario N2V 2S6 (CA)
(74) Representative: Patel, Binesh
(86) International application number: PCT/CA2008/000413
(87) International publication number: WO 2009/003265

(56) References cited:
- WO-A1-2007/041441
- WO-A2-2007/014185
- US-A1- 2005 282 543
- US-A1- 2007 121 884
- US-A1- 2007 121 885
- US-B1- 7 170 863
- ROSENBERG J ET AL: "SIP: Session Initiation Protocol" 20020601; 20020600, 1 June 2002 (2002-06-01), pages 1-269, XP015009039

## Description

### FIELD

The present application relates to managing calls to or from a mobile device and in particular managing calls to or from a mobile device associated with an enterprise.

### BACKGROUND

Many enterprises are moving towards using VoIP over their LANs and WLANs to interconnect various terminal devices for voice communications. Moreover, external voice communications with remote parties through, for example, the PSTN, may be converted to VoIP communications for routing within the enterprise communication system. A Private Branch exchange (PBX) typically acts as the interface between the PSTN and the internal enterprise communication system. The PBX provides conversion between digital circuit-switched calls and VoIP calls, and assists in routing calls to the correct terminal device. SIP signaling is commonly used to set-up, manage, and tear-down media paths for the VoIP calls.

In many enterprise communication systems, a proxy server may play a significant role in setting-up and managing calls involving terminal devices. One problem that arises in this regard is ensuring that the proxy server is included in any SIP signaling between a terminal device and other SIP entities, like the PBX.

WO2007/041441 relates to call management services to users receiving incoming calls on extensions on a private branch exchange (PBX) provided by an application server configured to provide call management services to at least one of the users and a protocol proxy configured to receive call information from the PBX according to a protocol for establishing call sessions.

"SIP: Session Initiation Protocol by Rosenberg et al, 2002 0601: 2002 0600, 1 June 2002, pages 1-269, XP 15009039 is an originating Internet standards track protocol document for the Session Initiation Protocol (SIP) standard.

### BRIEF DESCRIPTION OF THE DRAWINGS

In one aspect, the present application provides a method of enforcing use of an enterprise voice application server as a SIP proxy server for enterprise VoIP communication. The enterprise includes a client device having a first IP address and a client uniform resource identifier (URI), and a Private Branch exchange (PBX) configured as a SIP registrar having a registration entry binding the client URI to the first IP address. The enterprise voice application server has a proxy URI and a second IP address. The method includes the steps of receiving, at the client device, a SIP request message from the PBX addressed to the client URI, and determining whether the SIP request message was sent via the enterprise voice application server. If the SIP request message was not sent via the enterprise voice application server, then generating and sending a SIP 305 Use Proxy response message to the PBX, wherein the SIP 305 Use Proxy response message references the enterprise voice application server in a Contact field, and re-receiving the SIP request message from the PBX routed via the enterprise voice application server.

In another aspect, the present application provides a client device associated with an enterprise, which includes a Private Branch exchange (PBX) configured as a SIP registrar and an enterprise voice application server having a proxy uniform resource identifier (URI) and a second IP address. The client device includes a communications subsystem for engaging in IP-based communications with the enterprise, wherein the client device is configured to be assigned a first IP address and a client URI; a memory; a user interface for outputting information and for receiving user input; a processor for controlling the communications subsystem, the memory, and the user interface; and a communication application executable by the processor and configured to receive a SIP request message from the PBX addressed to the client URI. The SIP registrar includes a registration entry binding the client URI to the first IP address. The communication application is configured to determine whether the SIP request message was sent via the enterprise voice application server. The communication application is configured to generate and send a SIP 305 Use Proxy response message to the PBX if the SIP request message was not sent via the enterprise voice application server, wherein the SIP 305 Use Proxy response message references the enterprise voice application server in a Contact field.

In yet another aspect, the present application provides a computer program product comprising a machine-readable medium having encoded thereon computer-executable instructions for enforcing use of an enterprise voice application server as a SIP proxy server for enterprise VoIP communications. The enterprise includes a client device having a first IP address and a client uniform resource identifier (URI), and a Private Branch exchange (PBX) configured as a SIP registrar having a registration entry binding the client URI to the first IP address. The enterprise voice application server has a proxy URI and a second IP address. The computer-executable instructions include instructions for receiving at the client device, a SIP request message from the PBX addressed to the client URI; instructions for determining whether the SIP request message was sent via the enterprise voice application server; and instructions for generating and sending a SIP 305 Use Proxy response message to the PBX if the SIP request message was not sent via the enterprise voice application server, wherein the SIP 305 Use Proxy response message references the enterprise voice application server in a Contact field.

Other aspects of the present application will be apparent to those of ordinary skill in the art from a review of the following detailed description in conjunction with the drawings.

### BRIEF DESCRIPTION OF THE DRAWINGS

Reference will now be made, by way of example, to the accompanying drawings which show example embodiments of the present application, and in which:

Figure 1 shows, in block diagram form, an example system for managing enterprise-related mobile calls;

Figure 2 shows, in block diagram form, further details of the enterprise communications system;

Figure 3 shows a process of enforcing proxy use within the enterprise communication system; and

Figure 4 shows, in flowchart form, an example method for enforcing proxy use within the enterprise communication system

Similar reference numerals may have been used in different figures to denote similar components.

### DESCRIPTION OF EXAMPLE EMBODIMENTS

Embodiments of the present application are not limited to any particular operating system, mobile device architecture, server architecture, or computer programming language.

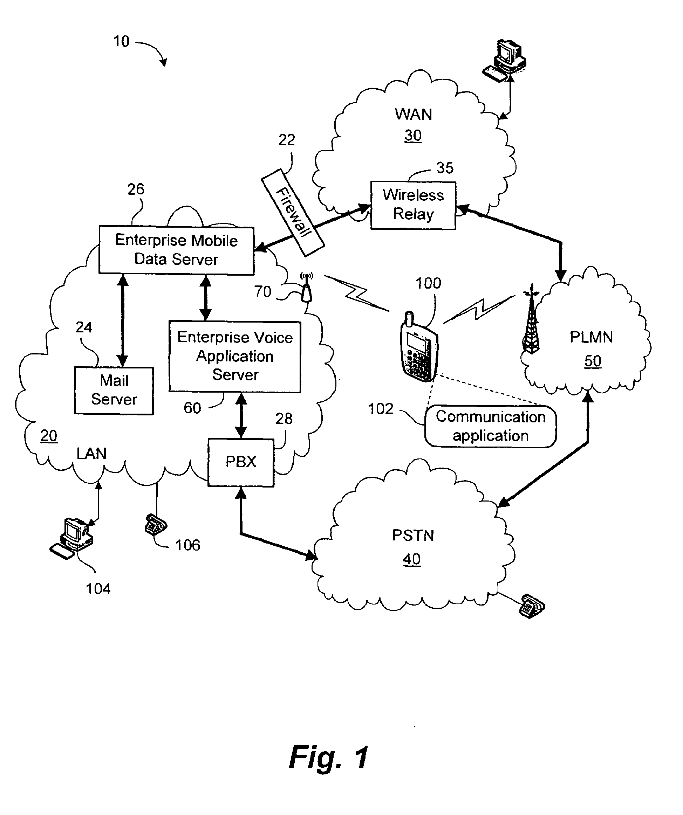

Referring now to the drawings, Figure 1 shows, in block diagram form, an example enterprise communications system 10. The example system 10 includes an enterprise local area network (LAN) 20, which is connected, through a firewall 22, to a wide area network (WAN) 30, such as the Internet. The system 10 may also connect to a public switched telephone network (PSTN) 40, and a public land mobile network (PLMN) 50, which may also be referred to as a wireless wide area network (WWAN).

The enterprise system 10 may include a number of enterprise-associated mobile devices 100 (only one shown). In many embodiments, the mobile device 100 and the LAN 20 are owned or operated in common by the enterprise. For example, the mobile device 100 may be provided by the enterprise to one of its employees for use in connection with his or her employment.

The mobile device 100 is configured for wireless communication. In particular, the mobile device 100 includes an appropriate radio transceiver and associated software for communicating with the PLMN 50. The mobile device 100 is capable of both wireless voice and data communications via the PLMN 50. In various embodiments, the PLMN 50 and mobile device 100 may be configured to operate in compliance with any one or more of a number of wireless protocols, including GSM, GPRS, CDMA, EDGE, UMTS, EvDO, HSPDA, WiMAX, or a variety of others. It will be appreciated that the mobile device 100 may roam within the PLMN 50 and across PLMNs, in known manner, as the user moves.

The LAN 20 is enterprise-specific and typically includes a number of networked servers, computers, and other devices. For example, the LAN 20 may connect one or more desktop or laptop computers 104 (one shown). The connection may be wired or wireless (WLAN) in some embodiments. The LAN 20 may also connect to one or more desktop telephone sets 106 (one shown).

The LAN 20 includes one or more mail servers, such as mail server 24, for coordinating the transmission, storage, and receipt of electronic messages for client devices operating within the LAN 20. Typical mail servers include the Microsoft Exchange Server^{™} and the IBM Lotus Domino^{™} server. Each user within the enterprise typically has at least one user account within the LAN 20. Associated with each user account is message address information, such as an e-mail address. Messages addressed to a user message address are stored on the LAN 20 in the mail server 24. The messages may be retrieved by the user using a messaging application, such as an e-mail client application. The messaging application may be operating on a user's computer 104 connected to the LAN 20 within the enterprise. In some embodiments, the user may be permitted to access stored messages using a remote computer, for example at another location via the WAN 30 using a VPN connection. Using the messaging application, the user may also compose and send messages addressed to others, within or outside the LAN 20. The messaging application causes the mail server 24 to send a composed message to the addressee, often via the WAN 30.

The system 10 further includes a wireless relay 35 that serves to route messages received over the PLMN 50 from the mobile device 100 to the corresponding enterprise LAN 20. The wireless relay 35 also routes messages from the enterprise LAN 20 to the mobile device 100 via the PLMN 50. The wireless relay 35 is shown, in this embodiment, located with the WAN 30.

The LAN 20 also includes an enterprise mobile data server 26. Together with the wireless relay 35, the enterprise mobile data server 26 functions to redirect or relay incoming e-mail messages addressed to a user's e-mail address within the LAN 20 to the user's mobile device 100 and to relay incoming e-mail messages composed and sent via the mobile device 100 out to the intended recipients within the WAN 30 or elsewhere. The enterprise mobile data server 26 and wireless relay 35 together facilitate "push" e-mail service for the mobile device 100 enabling the user to send and receive e-mail messages using the mobile device 100 as though the user were connected to an e-mail client within the LAN 20 using the user's enterprise-related e-mail address, for example on computer 104.

As is typical in many enterprises, the LAN 20 includes a Private Branch eXchange (PBX) 28 having a connection with the PSTN 40 for routing incoming and outgoing voice calls for the enterprise. On one side, the PBX 28 is connected to the PSTN 40, for example, via direct inward dialing (DID) trunks. The PBX 28 may use ISDN signaling protocols for establishing and breaking circuit-switched connections through the PSTN 40 and related signaling and communications. On its other side, the PBX 28 connects to the LAN 20 and, through the LAN 20, to telephone terminal devices, such as conventional desk sets 106, softphones operating on computers 104, etc. Within the enterprise, each individual may have an associated extension number or direct dial phone number. Calls outgoing from the PBX 28 to the PSTN 40 or incoming from the PSTN 40 to the PBX 28 are typically digital circuit-switched calls. Within the enterprise, i.e. between the PBX 28 and terminal devices, voice calls are Voice-over-IP (VoIP) calls. The PBX 28 implements the switching to connect legs and provides the conversion between a circuit-switched call and a VoIP call. In many embodiments, the PBX 28 provides a number of additional functions including automated attendant, interactive voice response, call forwarding, voice mail, etc. It may also implement certain usage restrictions on enterprise users, such as blocking international calls or 1-900 calls.

In the present embodiment, Session Initiation Protocol (SIP) is used to set-up, manage, and terminate media sessions for voice calls.

The LAN 20 may also include one or more wireless access points 70. The wireless access points 70 provide wireless local area network (WLAN) connectivity to mobile devices 100 (or WiFi-enabled computers 104 or telephone sets 106) within the enterprise campus. The wireless access points 70 may be configured in accordance with one of the IEEE 802.11 specifications. The mobile device 100 may be equipped with a suitable antenna, RF transceiver, and software for accessing and using the WLAN connectivity of the wireless access point 70, i.e. the mobile device 100 may be "Wi-Fi enabled". In this manner the mobile device 100 may establish an IP connection with the LAN 20 enabling relatively fast data communication.

To provide for management of voice calls by enterprise related terminal devices, such as the mobile device 100, the desk telephone set 106, or the computer 104, the LAN 20 includes an enterprise voice application server 60. The enterprise voice application server 60 and the PBX 28 together implement the enterprise communications solution to provide VoIP service to the telephone sets 106, softphones on computers 104, and mobile devices 100 of the enterprise.

The enterprise voice application server 60, together with the configuration of the mobile device 100, ensure that voice calls to or from the mobile device 100 are routed through the enterprise facilities. The mobile device 100 includes a communication application 102, which may include a phone application or other voice-based communication application, for placing and/or receiving VoIP calls. The communication application 102 is configured to employ SIP signaling to set-up, manage, and tear down media paths for VoIP calls. In other words, the communication application 102 renders the mobile device 100 a SIP User Agent (UA). In this regard, the communication application 102 is adapted to generate outgoing SIP messages as a SIP User Agent Client (UAC), and to receive and respond to incoming SIP messages as a SIP User Agent Server (UAS).

The other terminal devices of the enterprise, such as the softphone on the computer 104 and the telephone set 106 are also configured to employ SIP signaling to set-up, manage, and tear down media paths for VoIP calls. Each acts as a SIP UA and includes a communication application (not illustrated) similar to the communication application 102 implemented on the mobile device 100.

The enterprise voice application server 60 is show as a distinct server in Figure 1; however, in one embodiment, the enterprise voice application server 60 and enterprise mobile data server 26 may be implemented on a common server platform. In another embodiment, the functions and operations of the enterprise voice application server 60 may be implemented within the PBX 28. Other possibilities will also be appreciated.

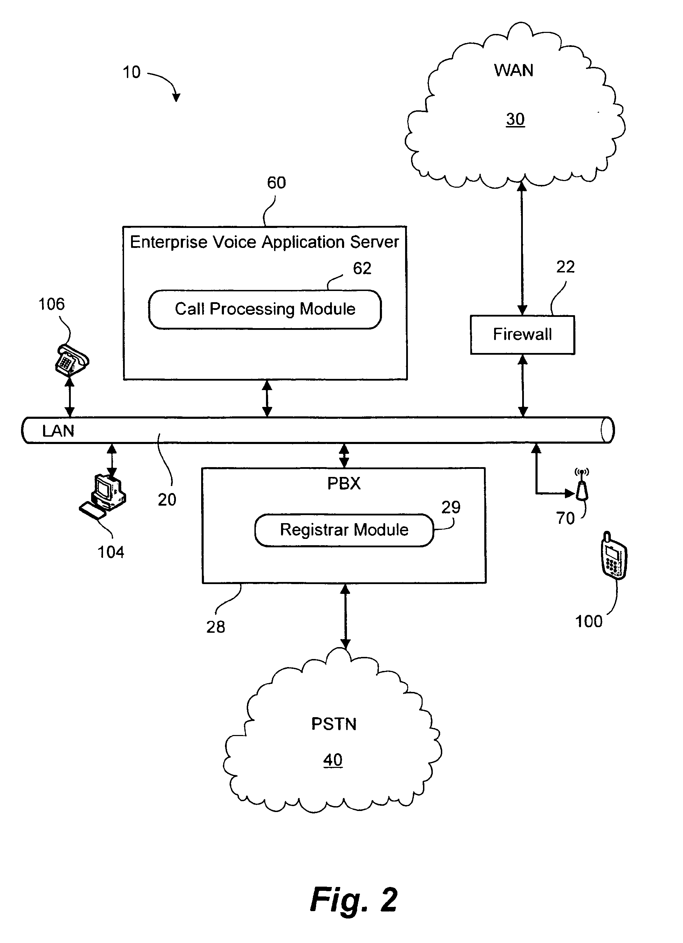

Reference is now made to Figure 2, which shows, in block diagram form, further details of the enterprise communications system 10.

The enterprise voice application server 60 includes a call processing module 62. The call processing module 62 allows the enterprise voice application server 60 to send and receive call set-up or management messages to and from the mobile device 100 and/or the PBX 28. The call processing module 62 may be configured to send and receive messages via a WLAN connection with the mobile device 100 through the access point 70, if such a connection is available. In some embodiments, in the absence of a WLAN connection, the call processing module 62 may be configured to send and receive data messages via the WAN 30 and PLMN 50, i.e. through the enterprise mobile data server 26 and wireless relay 35.

In particular, the call processing module 62 sends and receives SIP messages. In some embodiments, the call processing module 62 acts as a SIP proxy vis-à-vis the mobile device 100, softphone on the computer 104, and/or telephone set 106. These terminal devices may be configured to recognize the enterprise voice application server 60 as their outbound proxy for SIP communications. In some instances, the call processing module 62 may be configured to cause the enterprise voice application server 60 to act as a back-to-back user agent between the PBX 28 and the terminal devices, such as mobile device 100, etc.

It will be appreciated that the call processing module 62 may be implemented mainly by way of suitably programmed software components executed by one or more processors within the enterprise communications system 80.

The PBX 28 includes a registrar module 29. The registrar module 29 is configured to act as a SIP registrar for the enterprise domain. In other words, the registrar module 29 is adapted to receive SIP REGISTER requests from the terminal devices 100, 104, 106. As those skilled in the art and familiar with SIP will appreciated, the SIP REGISTER request creates a binding between the SIP URI of the requesting device and one or more contact addresses specified in the SIP REGISTER request. The registrar module 29 maintains a list of bindings accessible to proxy servers and redirect servers within its administrative domain. For example, when a user turns on his mobile device 100, one of the start-up operations performed by the communication application 102 on the mobile device 100 is to send a SIP REGISTER request to the PBX 28 specifying a current IP address or other contact address at which the user, in particular the mobile device 100, can be reached.

Incoming call requests received at the PBX 28 that result in a SIP INVITE addressed to one of the terminal devices are routed based on the Contact address information stored in the list of bindings maintained by the registrar module 29. For example, a voice call addressed to the URI user@enterprise.com will be routed based on the binding created by the registrar module 29 between the URI user@enterprise.com and the contact address, such as an IP address or a more specific URL, such as user@domain2.enterprise.com. This allows the SIP INVITE request to be sent directly to, for example, the mobile device 100.

In some instances, it may be desirable to route all SIP messaging through an intermediate entity. For example, in the embodiments of the present invention, it is desired to route SIP.signaling through the enterprise voice application server 60. The terminal devices, such as the mobile device 100, are configured to use the enterprise voice application server 60 as their outbound proxy. Accordingly, outgoing SIP INVITE messages and the like will be sent by the terminal devices via the enterprise voice application server 60. The devices and the enterprise voice application server 60 may then use certain mechanisms for ensuring that the enterprise voice application server 60 remains a part of further SIP signaling for that dialog. For example, in some instances the Record-Route command may be employed to keep the enterprise voice application server 60 involved in that dialog. The enterprise voice application server 60 inserts the Record-Route header in the SIP INVITE from the terminal device and subsequent SIP messaging in the dialog passes through the enterprise voice application server 60.

An issue arises with incoming SIP INVITE requests addressed to a terminal device, such as the mobile device 100. The registrar module 29 maintains a binding between the SIP URI associated with the mobile device 100 and its contact address. Accordingly, all SIP INVITES are sent directly to the mobile device 100, without passing through the enterprise voice application server 60.

RFC 3327 entitled Session Initiation Protocol (SIP) Extension Header Field for Registering Non-Adjacent Contacts defines an extension header field, "Path", for adding a proxy server to the path for any future requests addressed to an address-of-record. The registrar would add the proxy server as part of the path information stored in association with the binding created for the address-of-record as a result of the REGISTER request. However, to employ the Path operation, the PBX 28 and, in particular, the registrar module 29 must recognize and support this operation. Many PBX vendors consider RFC 3327 to be a security vulnerability and do not support the Path extension.

Another option for maintaining the enterprise voice application server 60 within the path of future SIP dialogs is to structure the registration such that the SIP URIs of the terminal devices are bound to the address of the enterprise voice application server 60 instead of their own addresses. In other words, when the enterprise voice application server 60 receives a REGISTER request from, for example, the mobile device 100, it would place its own address in the Contact field of the REGISTER request before passing the request on to the routing module 29 of the PBX 28. Therefore the PBX 28 would bind the mobile device 100 user's SIP URI to the IP address of the enterprise voice application server 60 and any incoming SIP INVITEs addressed to the user's SIP URI would be sent to the enterprise voice application server 60.

A problem with this approach is that many PBXs that implement a registration function will, for security reasons, refuse to accept a common contact address for multiple URIs. In other words, more than one SIP URI cannot have the same contact address in the bindings list. This prevents the enterprise voice application server 60 from using its own address as the contact address for all the SIP URIs within the enterprise. In some instances, PBXs may have an exception to this general rule against multiple registrations for terminal devices that are configured to have more than one line; however, this exception typically must be preconfigured and is not necessarily applicable to the example embodiments disclosed herein.

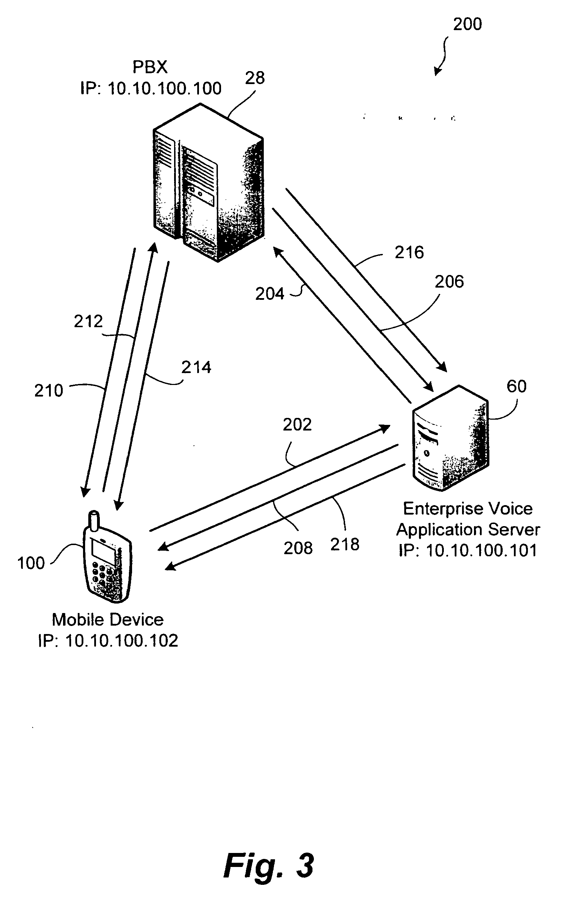

Reference is now made to Figure 3, which illustrates a process 200 of enforcing proxy use within the enterprise communication system 10. The process 200 is implemented by the PBX 28, the enterprise voice application server 60, and the terminal device, which in this example is the mobile device 100.

In this example, the mobile device 100 has a SIP URI of user@enterprise.com and an IP address of 10.10.100.102, and the enterprise voice application server 60 has an IP address of 10.10.100.101. The PBX 28 IP address is 10.10.100.100.

The process 200 begins with registration of the mobile device 100. The mobile device 100 initiates registration by sending a SIP REGISTER request to the enterprise voice application server 60 in step 202. The SIP REGISTER request includes user@enterprise.com in the "To" field and IP address 10.10.100.102 in the Contact field.

The enterprise voice application server 60 receives the SIP REGISTER request and forwards it to the PBX 28 in step 204. The Contact field remains 10.10.100.102 in the forwarded request.

The PBX 28 accepts the REGISTER request and creates a binding by which SIP URI user@enterprise.com is associated with contact address 10.10.100.102. In step 206, the PBX 28 sends a SIP 200 OK message back to the enterprise voice application server 60. The enterprise voice application server 60 relays the SIP 200 OK message to the mobile device 100 in step 208. This completes the registration portion of the process 200.

Later, in step 210, the PBX 28 originates a call to the mobile device 100 by sending a SIP INVITE to the mobile device 100. In one example, the call to the mobile device 100 may result from the PBX 28 having received an incoming call from a remote party via the PSTN (not shown). In determining where to send the SIP INVITE, the PBX 28 accesses the registrar list of bindings to look up the contact address for SIP URI user@enterprise.com. There, it finds IP address 10.10.100.102 associated with the SIP URI. It will be appreciated that the PBX 28 may have additional associations through which a user's telephone number or extension is associated with the user's SIP URI. As is shown in Figure 3, the SIP INVITE is sent directly to the mobile device 100 in step 210.

The mobile device 100 receives the SIP INVITE directly from the PBX 28. It assesses whether the SIP INVITE has arrived via the enterprise voice application server 60 and, finding that it did not, the mobile device 100 sends a SIP 305 Use Proxy response message back to the PBX 28 in step 212. The Contact field within the SIP 305 Use Proxy response message specifies the IP address of the enterprise voice application server 60. The PBX 28 acknowledges safe receipt of the SIP 305 Use Proxy response message with an ACK message in step 214.

The SIP 305 Use Proxy response causes the PBX 28 to route any messages intended for the mobile device 100 to the designated proxy, which in this case is the enterprise voice application server 60. The instruction remains in place for the duration of the dialog, meaning any SIP requests or responses relating to the dialog will be routed to the enterprise voice application server 60.

In step 216, the PBX 28 re-sends the SIP INVITE addressed to the mobile device 100; however, this time it sends the SIP INVITE to the enterprise voice application server 60. The enterprise voice application server 60 forwards the SIP INVITE request to the mobile device 100.

All subsequent SIP requests and responses for this dialog pass through the enterprise voice application server 60.

This process 200 allows an enterprise-related terminal device to be configured to force use of the enterprise voice application server 60 as a SIP proxy even where the PBX 28 is configured to prevent use of RFC 3327 or multiple registration bindings to a single IP address.

Although the foregoing example relates to the mobile device 100, it will be appreciated that the same process may be employed with the softphone on the computer 104 (Fig. 2) or with the telephone set 106 (Fig. 2).

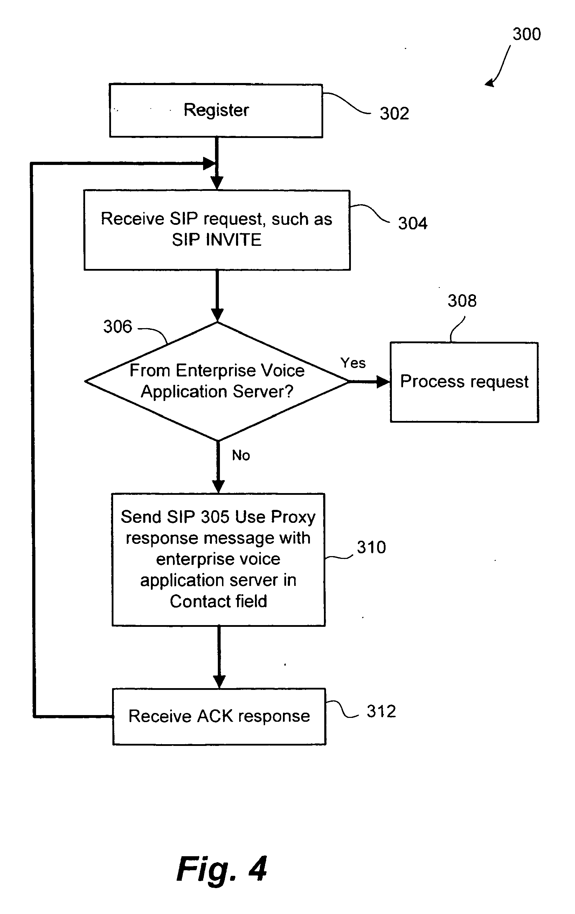

Reference is now made to Figure 4, which shows, in flowchart form, an example method 300 for enforcing proxy use within the enterprise communication system 10. The method 300 illustrates actions from the point-of-view of the terminal device, such as the mobile device 100 (Fig. 2).

In step 302, the terminal device registers. In practice, the terminal device may be preconfigured with the address of its outbound proxy server, i.e. the enterprise voice application server 60 (Fig. 2). In some embodiments, the terminal device may discover its outbound proxy, i.e. the enterprise voice application server 60, in accordance with standard SIP procedures. In either case, the terminal device sends a SIP REGISTER request message to the enterprise voice application server 60, which then forwards the request to the registrar. The registrar responds with a 200 OK message to the enterprise voice application server 60, which then forwards the 200 OK message to the terminal device to complete registration.

In step 304, the terminal device receives a SIP request. The SIP request may, in some instances, be a SIP INVITE, but it is not necessarily an INVITE. In step 306, the terminal device assesses whether the received request arrived via the enterprise voice application server 60. In one embodiment, the terminal device reads the Via fields of the received SIP request header to determine whether the enterprise voice application server 60 was the most recent intermediate proxy traversed by the SIP request. If it was received via the enterprise voice application server 60, then the terminal device proceeds to step 308 to process the request as per usual. If not, then in step 310, the terminal device responds to the SIP request with a SIP 305 Use Proxy response message. The SIP 305 Use Proxy response message specifies the enterprise voice application server 60 in the Contact field of the response header. An ACK message is received in step 312 in reply to the SIP 305 Use Proxy message, and the method 300 returns to step 304.

The sending SIP server, i.e. the PBX 28, reacts to the SIP 305 Use Proxy message by re-sending the SIP request via the enterprise voice application server 60, which means that the re-sent request will satisfy the evaluation performed in step 306 and the method 300 will proceed to step 308 to process the request.

Certain adaptations and modifications of the described embodiments can be made. Therefore, the above discussed embodiments are considered to be illustrative and not restrictive.

## Claims

1. A method (306) of enforcing use of an enterprise voice application server (60) as a SIP proxy server for enterprise VoIP communications, wherein the enterprise includes a client device (100) having a first IP address and a client uniform resource identifier URI, and a Private Branch exchange PBX (28) configured as a SIP registrar having a registration entry binding the client URI to the first IP address, the enterprise voice application server (60) having a proxy URI and a second IP address, the method comprising the steps of:
Receiving (304), at the client device (100), a SIP request message from the PBX (28) addressed to the client URI; and **characterized by** :
Determining (306) whether the SIP request message was sent via the enterprise voice application server and, if not, then generating and sending (310) a SIP 305 Use Proxy response message to the PBX (28), wherein the SIP 305 Use Proxy response message references the enterprise voice application server (60) in a Contact field, and
re-receiving the SIP request message from the PBX (28) routed via the enterprise voice application server (60).

2. The method claimed in claim 1, wherein the SIP request message is an INVITE message relating to a call request from a remote party received by the PBX over the public switched telephone network.

3. The method claimed in claim 1, further including steps of sending a SIP REGISTER request to the enterprise voice application server and receiving a SIP 200 OK response message.

4. The method claimed in claim 3, further including steps of forwarding the SIP REGISTER request from the enterprise voice application server to the PBX, and creating the registration entry.

5. The method claimed in claim 1, wherein the PBX is configured to refuse a registration request that results in binding more than one URI to the same Contact address.

6. The method claimed in claim 1, wherein the step of determining comprises reading a Via header of the SIP request message and determining that an address for the enterprise voice application server is not listed in the Via header.

7. The method claimed in claim 1, wherein the client device comprises one of a mobile device, softphone, and desk telephone set.

8. The method claimed in claim 1, wherein the SIP 305 Use Proxy response message includes the Proxy URI in the Contact field.

9. The method claimed in claim 1, wherein the SIP 305 Use Proxy response message includes the second IP address in the contact field.

10. A client device (100) associated with an enterprise, the enterprise including a Private Branch exchange, PBX (28) configured as a SIP registrar wherein the SIP registrar includes a registration entry binding the client URI to the first IP address, and an enterprise voice application server (60) having a proxy uniform resource identifier, URI and a second IP address, the client device comprising:
a communications subsystem for engaging in IP-based communications with the enterprise, wherein the client device is configured to be assigned a first IP address and a client URI;
a memory;
a user interface for outputting information and for receiving user input;
a processor for controlling the communications subsystem, the memory, and the user interface; and
a communication application (102) executable by the processor and configured to receive a SIP request message from the PBX (28) addressed to the client URI,
**characterized in that** :
the communication application is configured to determine whether the SIP request message was sent via the enterprise voice application server (60),
and wherein the communication application is configured to generate and send a SIP 305 Use Proxy response message to the PBX (28) if the SIP request message was not sent via the enterprise voice application server (60), wherein the SIP 305 Use Proxy response message references the enterprise voice application server (60) in a Contact field.

11. The client device claimed in claim 10, wherein the SIP request message is an INVITE message relating to a call request from a remote party received by the PBX over the public switched telephone network.

12. The client device claimed in claim 10, wherein the communication application is configured to read a Via header of the SIP request message and evaluate whether an address for the enterprise voice application server is listed in the Via header to determine whether the SIP request message was sent via the enterprise voice application server.

13. The client device claimed in claim 10, wherein the client device comprises one of a mobile device, softphone, and desk telephone set.

14. The client device claimed in claim 10, wherein the SIP 305 Use Proxy response message includes the Proxy URI in the Contact field.

15. The client device claimed in claim 10, wherein the SIP 305 Use Proxy response message includes the second IP address in the contact field.

16. A computer program product comprising a machine-readable medium having encoded thereon computer executable instructions for enforcing use of an enterprise voice application server (60) as a SIP proxy server for enterprise VoIP communications, wherein the enterprise includes a client device (100) having a first IP address and a client uniform resource identifier, URV, and a Private Branch exchange, PBX (28) configured as a SIP registrar having a registration entry binding the client URI to the first IP address, the enterprise voice application server (60) having a proxy URI and a second IP address, the computer-executable instructions when executed at the client device performing the following steps:
receiving, at the client device, a SIP request message from the PBX (28) addressed to the client URI; **characterized by**:
determining whether the SIP request message was sent via the enterprise voice application server (60); and
generating and sending a SIP 305 Use Proxy response message to the PBX (28) if the SIP request message was not sent via the enterprise voice application server (60), wherein the SIP 305 Use Proxy response message references the enterprise voice application server (60) in a Contact field.

## Patentansprüche

1. Ein Verfahren (306) zum Durchsetzen einer Verwendung eines Unternehmens-Sprachanwendungs-Servers (60) als einen SIP-Proxy-Server für Unternehmens-VoIP-Kommunikationen, wobei das Unternehmen eine Client-Vorrichtung (100), die eine erste IP-Adresse und einen Client-URI (Uniform Resource Identifier) hat, und eine Nebenstellenanlage (PBX-Private Branch Exchange) (28) aufweist, die konfiguriert ist als ein SIP-Registrar mit einem Registrierungseintrag, der den Client-URI mit der ersten IP-Adresse verbindet, wobei der Unternehmens-Sprachanwendungs-Server (60) einen Proxy-URI und eine zweite IP-Adresse hat, wobei das Verfahren die Schritte aufweist:
Empfangen (304), an der Client-Vorrichtung (100), einer SIP-Anforderungsnachricht von der PBX (28), die an den Client-URI adressiert ist; und **gekennzeichnet durch**:
Bestimmen (306), ob die SIP-Anforderungsnachricht über den Unternehmens-Sprachanwendungs-Server gesendet wurde, und wenn nicht, dann Erzeugen und Senden (310) einer SIP-305-Use-Proxy-Antwortnachricht an die PBX (28), wobei die SIP-305-Use-Proxy-Antwortnachricht den Unternehmens-Sprachanwendungs-Server (60) in einem Kontakt-Feld referenziert, und
erneutes Empfangen der SIP-Anforderungsnachricht von der PBX (28), geleitet über den Unternehmens- Sprachanwendungs-Server (60).

2. Das Verfahren gemäß Anspruch 1, wobei die SIP-Anforderungsnachricht eine INVITE-Nachricht ist, die eine Anrufanforderung von einem entfernten Teilnehmer betrifft, die von der PBX über das öffentliche Telefonnetzwerk empfangen wird.

3. Das Verfahren gemäß Anspruch 1, das weiter umfasst die Schritte eines Sendens einer SIP-REGISTER-Anforderung an den Unternehmens-Sprachanwendungs-Server und eines Empfangens einer SIP-200-OK-Antwortnachricht.

4. Das Verfahren gemäß Anspruch 3, das weiter umfasst die Schritte eines Weiterleitens der SIP-REGISTER-Anforderung von dem Unternehmens-Sprachanwendungs-Server an die PBX und eines Erstellens des Registrierungseintrags.

5. Das Verfahren gemäß Anspruch 1, wobei die PBX konfiguriert ist, eine Registrierungsanforderung abzulehnen, die zu einem Verbinden von mehr als einem URI mit derselben Kontaktadresse führt.

6. Das Verfahren gemäß Anspruch 1, wobei der Schritt des Bestimmens aufweist ein Lesen eines Via-Headers der SIP-Anforderungsnachricht und ein Bestimmen, dass eine Adresse für den Unternehmens-Sprachanwendungs-Server nicht in dem Via-Header aufgeführt ist.

7. Das Verfahren gemäß Anspruch 1, wobei die Client-Vorrichtung eines aus einer mobilen Vorrichtung, einem Softphone und einem Tischtelefongerät aufweist.

8. Das Verfahren gemäß Anspruch 1, wobei die SIP-305-Use-Proxy-Antwortnachricht den Proxy-URI in dem Kontakt-Feld umfasst.

9. Das Verfahren gemäß Anspruch 1, wobei die SIP-305-Use-Proxy-Antwortnachricht die zweite IP-Adresse in dem Kontakt-Feld umfasst.

10. Eine Client-Vorrichtung (100), die mit einem Unternehmen assoziiert ist, wobei das Unternehmen eine Nebenstellenanlage (PBX - Private Branch Exchange) (28) aufweist, die konfiguriert ist als ein SIP-Registrar, wobei der SIP-Registrar einen Registrierungseintrag umfasst, der den Client-URI mit der ersten IP-Adresse verbindet, und einen Unternehmens-Sprachanwendungs-Server (60) mit einem Proxy-URI (Uniform Resource Identifier) und einer zweiten IP-Adresse, wobei die Client-Vorrichtung aufweist:
ein Kommunikationsteilsystem zum Teilnehmen an IP-basierten Kommunikationen mit dem Unternehmen, wobei die Client-Vorrichtung konfiguriert ist, dass ihr eine erste IP-Adresse und ein Client-URI zugewiesen werden;
einen Speicher;
eine Benutzerschnittstelle zum Ausgeben von Information und zum Empfangen einer Benutzereingabe;
einen Prozessor zum Steuern des Kommunikationsteilsystems, des Speichers und der Benutzerschnittstelle; und
eine Kommunikationsanwendung (102), die durch den Prozessor ausgeführt werden kann und konfiguriert ist, eine SIP-Anforderungsnachricht von der PBX (28) zu empfangen, die an den Client-URI adressiert ist,
**dadurch gekennzeichnet, dass**:
die Kommunikationsanwendung konfiguriert ist zum Bestimmen, ob die SIP-Anforderungsnachricht über den Unternehmens-Sprachanwendungs-Server (60) gesendet wurde,
und wobei die Kommunikationsanwendung konfiguriert ist zum Erzeugen und Senden einer SIP-305-Use-Proxy-Antwortnachricht an die PBX (28),
wenn die SIP-Anforderungsnachricht nicht über den Unternehmens-Sprachanwendungs-Server (60) gesendet wurde, wobei die SIP-305-Use-Proxy-Antwortnachricht den Unternehmens-Sprachanwendungs-Server (60) in einem Kontakt-Feld referenziert.

11. Die Client-Vorrichtung gemäß Anspruch 10, wobei die SIP-Anforderungsnachricht eine INVITE-Nachricht ist, die eine Anrufanforderung von einem entfernten Teilnehmer betrifft, die von der PBX über das öffentliche Telefonnetzwerk empfangen wird.

12. Die Client-Vorrichtung gemäß Anspruch 10, wobei die Kommunikationsanwendung konfiguriert ist zum Lesen eines Via-Headers der SIP-Anforderungsnachricht und Evaluieren, ob eine Adresse für den Unternehmens-Sprachanwendungs-Server in dem Via-Header aufgeführt ist, um zu bestimmen, ob die SIP-Anforderungsnachricht über den Unternehmens-Sprachanwendungs-Server gesendet wurde.

13. Die Client-Vorrichtung gemäß Anspruch 10, wobei die Client-Vorrichtung eines aus einer mobilen Vorrichtung, einem Softphone und einem Tischtelefongerät aufweist.

14. Die Client-Vorrichtung gemäß Anspruch 10, wobei die SIP-305-Use-Proxy-Antwortnachricht den Proxy-URI in dem Kontakt-Feld umfasst.

15. Die Client-Vorrichtung gemäß Anspruch 10, wobei die SIP-305-Use-Proxy-Antwortnachricht die zweite IP-Adresse in dem Kontakt-Feld umfasst.

16. Ein Computerprogrammprodukt, das ein maschinenlesbares Medium aufweist mit darauf codierten computerausführbaren Anweisungen zum Durchsetzen einer Verwendung eines Unternehmens-Sprachanwendungs-Servers (60) als einen SIP-Proxy-Server für Unternehmens-VoIP-Kommunikationen, wobei das Unternehmen eine Client-Vorrichtung (100), die eine erste IP-Adresse und einen Client-URI (Uniform Resource Identifier) hat, und eine Nebenstellenanlage (PBX- Private Branch Exchange) (28) aufweist, die konfiguriert ist als ein SIP-Registrar mit einem Registrierungseintrag, der den Client-URI mit der ersten IP-Adresse verbindet, wobei der Unternehmens-Sprachanwendungs-Server (60) einen Proxy-URI und eine zweite IP-Adresse hat, wobei die computerausführbaren Anweisungen bei Ausführung auf der Client-Vorrichtung die folgenden Schritte durchführen:
Empfangen, an der Client-Vorrichtung, einer SIP-Anforderungsnachricht von der PBX (28), die an den Client-URI adressiert ist;
**gekennzeichnet durch**:
Bestimmen, ob die SIP-Anforderungsnachricht über den Unternehmens-Sprachanwendungs-Server (60) gesendet wurde; und
Erzeugen und Senden einer SIP-305-Use-Proxy-Antwortnachricht an die PBX (28), wenn die SIP-Anforderungsnachricht nicht über den Unternehmens-Sprachanwendungs-Server (60) gesendet wurde, wobei die SIP-305-Use-Proxy-Antwortnachricht den Unternehmens-Sprachanwendungs-Server (60) in einem Kontakt-Feld referenziert.

## Revendications

1. Procédé (306) destiné à faire utiliser un serveur d'applications vocales d'entreprise (60) comme serveur mandataire SIP pour les communications VoIP de l'entreprise, l'entreprise comprenant un dispositif client (100) possédant une première adresse IP et un identificateur uniforme de ressource, URI, de client et un central privé (28) configuré comme registre SIP avec une rubrique d'enregistrement qui relie l'identificateur URI du client à la première adresse IP, le serveur d'applications vocales d'entreprise (60) possédant un identificateur URI de mandataire et une seconde adresse IP, le procédé comprenant les étapes consistant à :
recevoir (304) sur le dispositif client (100) un message de demande SIP provenant du central privé (28) adressé à l'identificateur URI du client ; et
**caractérisé par** les étapes consistant à :
déterminer (306) si le message de demande SIP a été envoyé via le serveur d'applications vocales d'entreprise et, si tel n'est pas le cas, produire et envoyer (310) au central privé (28) un message de réponse SIP d'utilisation du mandataire 305, le message de réponse SIP d'utilisation du mandataire 305 comprenant une référence au serveur d'applications vocales d'entreprise (60) dans un champ de contact ; et
recevoir à nouveau le message de demande SIP du central privé (28), routé via le serveur d'applications vocales d'entreprise (60).

2. Procédé selon la revendication 1, dans lequel le message de demande SIP est un message INVITE intéressant une demande d'appel en provenance d'une partie distante, reçue par le central privé via le réseau téléphonique public commuté.

3. Procédé selon la revendication 1, comprenant en outre les étapes consistant à envoyer une demande REGISTER SIP au serveur d'applications vocales d'entreprise et à recevoir un message de réponse OK SIP 200.

4. Procédé selon la revendication 3, comprenant en outre les étapes consistant à acheminer la demande REGISTER SIP provenant du serveur d'applications vocales d'entreprise vers le central privé et à créer la rubrique d'enregistrement.

5. Procédé selon la revendication 1, dans lequel le central privé est configuré pour refuser une demande d'enregistrement qui aboutit à lier plusieurs identificateurs URI à la même adresse de contact.

6. Procédé selon la revendication 1, dans lequel l'étape de détermination comprend les étapes consistant à lire un en-tête Via du message de demande SIP et à déterminer qu'une adresse du serveur d'applications vocales d'entreprise n'est pas énumérée dans l'en-tête Via.

7. Procédé selon la revendication 1, dans lequel le dispositif client est l'un des suivants : dispositif mobile, téléphone intelligent et poste téléphonique de bureau.

8. Procédé selon la revendication 1, dans lequel le message de réponse SIP d'utilisation du mandataire 305 comprend l'identificateur URI du mandataire dans le champ de contact.

9. Procédé selon la revendication 1, dans lequel le message de réponse SIP d'utilisation du mandataire 305 comprend la seconde adresse IP dans le champ de contact.

10. Dispositif client (100) associé à une entreprise, l'entreprise comprenant un central privé (28) configuré comme registre SIP, le registre SIP comprenant une rubrique d'enregistrement qui relie l' identificateur URI du client et la première adresse IP, et un serveur d'applications vocales d'entreprise (60) possédant un identificateur URI de mandataire et une seconde adresse IP, le dispositif client comprenant :
un sous-système de communication destiné à réaliser des communications de type IP avec l'entreprise, le dispositif client étant configuré pour se voir attribuer une première adresse IP et un identificateur URI du client ;
une mémoire ;
une interface utilisateur destinée à fournir des informations et à recevoir des entrées de l'utilisateur ;
un processeur destiné à commander le sous-système de communication, la mémoire et l'interface utilisateur ; et
une application de communication (102) pouvant s'exécuter sur le processeur et configurée pour recevoir un message de demande SIP en provenance du central privé (28) et destinée à l'identificateur URI du client ;
**caractérisé en ce que** :
l'application de communication est configurée pour déterminer si le message de demande SIP a été envoyé via le serveur d'applications vocales d'entreprise (60) ; et
dans lequel l'application de communication est configurée pour produire et envoyer un message de réponse SIP d'utilisation du mandataire 305 au central privé (28) si le message de demande SIP n'a pas été envoyé via le serveur d'applications vocales d'entreprise (60), le message de réponse SIP d'utilisation du mandataire 305 comprenant une référence au serveur d'applications vocales d'entreprise (60) dans un champ de contact.

11. Dispositif client selon la revendication 10, dans lequel le message de demande SIP est un message INVITE intéressant une demande d'appel en provenance d'une partie distante, reçue par le central privé via le réseau téléphonique public commuté.

12. Dispositif client selon la revendication 10, dans lequel l'application de communication est configurée pour lire un en-tête Via du message de demande SIP et pour évaluer si une adresse du serveur d'applications vocales d'entreprise est énumérée dans l'en-tête Via afin de déterminer si le message de demande SIP a été envoyé via le serveur d'applications vocales d'entreprise.

13. Dispositif client selon la revendication 10, dans lequel le dispositif client est l'un des suivants :
dispositif mobile, téléphone intelligent et poste téléphonique de bureau.

14. Dispositif client selon la revendication 10, dans lequel le message de réponse SIP d'utilisation du mandataire 305 comprend l'identificateur URI du mandataire dans le champ de contact.

15. Dispositif client selon la revendication 10, dans lequel le message de réponse SIP d'utilisation du mandataire 305 comprend la seconde adresse IP dans le champ de contact.

16. Progiciel d'ordinateur comprenant un support lisible par la machine portant codées des instructions exécutables d'ordinateur destinées à faire utiliser un serveur d'applications vocales d'entreprise (60) comme serveur mandataire SIP pour les communications VoIP de l'entreprise, l'entreprise comprenant un dispositif client (100) possédant une première adresse IP et un identificateur uniforme de ressource, URI, du client et un central privé (28) configuré comme registre SIP avec une rubrique d'enregistrement qui relie l'identificateur URI du client à la première adresse IP, le serveur d'applications vocales d'entreprise (60) possédant un identificateur URI de mandataire et une seconde adresse IP, les instructions exécutables d'ordinateur, lorsqu'elles sont exécutées sur le dispositif client, exécutant l'étape suivante :
recevoir sur le dispositif client un message de demande SIP provenant du central privé (28) et adressé à l'identificateur URI du client ;
**caractérisé par** les étapes consistant à :
déterminer si le message de demande SIP a été envoyé via le serveur d'applications vocales d'entreprise ; et
si le message de demande SIP n'a pas été envoyé via le serveur d'applications vocales d'entreprise (60), produire et envoyer au central privé (28) un message de réponse SIP d'utilisation du mandataire 305, le message de réponse SIP d'utilisation du mandataire 305 comprenant une référence au serveur d'applications vocales d'entreprise (60) dans un champ de contact.
